(19) Europäisches Patentamt
European Patent Office
Office européen des brevets

(11) **EP 1 265 382 B1**

(12) **EUROPÄISCHE PATENTSCHRIFT**

(45) Veröffentlichungstag und Bekanntmachung des Hinweises auf die Patenterteilung:
**23.11.2005   Patentblatt 2005/47**

(51) Int Cl.⁷: **H04B 10/18**

(21) Anmeldenummer: **02100476.7**

(22) Anmeldetag: **13.05.2002**

(54) **Optisches Übertragungssystem zur hochbitratigen Übertragung von optischen Signalen mit Dispersionskompensationseinheiten**

Optical transmission system for high bitrate optical signals with dispersion compensation means

Système de transmission optique pour signaux optiques à haut débit avec moyens de compensation de la dispersion

(84) Benannte Vertragsstaaten:
**DE FR GB IT**

(30) Priorität: **06.06.2001  DE 10127345**

(43) Veröffentlichungstag der Anmeldung:
**11.12.2002   Patentblatt 2002/50**

(73) Patentinhaber: **SIEMENS AKTIENGESELLSCHAFT
80333 München (DE)**

(72) Erfinder:
• **Fürst, Cornelius
  81371, München (DE)**
• **Färbert, Andreas, Dr.
  81825, München (DE)**
• **Gottwald, Erich, Dr.
  83607, Holzkirchen (DE)**
• **Mohs, Georg, Dr.
  Milltown, NJ 08850 (US)**
• **Scheerer, Christian, Dr.
  Ottawa, Ontario K1S 2S4 (CA)**

(56) Entgegenhaltungen:
  **DE-A- 19 945 143**

• **WEN S ET AL: "ULTRALONG LIGHTWAVE SYSTEMS WITH INCOMPLETE DISPERSION COMPENSATIONS" JOURNAL OF LIGHTWAVE TECHNOLOGY, IEEE. NEW YORK, US, Bd. 19, Nr. 4, April 2001 (2001-04), Seiten 471-479, XP001122602 ISSN: 0733-8724**
• **ROYSET A: "Self phase modulation limitations in long nonrepeatered standard fibre transmission: influence from dispersion compensation scheme and modulation format" NONLINEAR OPTICS '98: MATERIALS, FUNDAMENTALS AND APPLICATIONS TOPICAL MEETING KAUAI, HI, USA 10-14 AUG. 1998, NEW YORK, NY, USA,IEEE, US, 10. August 1998 (1998-08-10), Seiten 150-152, XP010296374 ISBN: 0-7803-4950-4**

**Beschreibung**

Die Erfindung betrifft ein optisches Übertragungssystem zur hochbitratigen Übertragung von optischen Signalen bestehend aus mehreren optischen Faserstreckenabschnitten mit jeweils einer optischen Faser und einer Dispersionskompensationseinheit, wobei die Dispersionskompensationseinheiten unterschiedliche Kompensationsbeträge aufweisen.

In optischen Übertragungssystemen mit hohen Datendurchsatzraten, so auch bei nach dem WDM-Prinzip (Wavelength Division Multiplexing) arbeitenden optischen Übertragungssystemen sowie auch bei optischen Einkanal-Übertragungssystemen, werden durch die bei der Übertragung von optischen Signalen über die optische Faser auftretende chromatische Dispersion und nichtlinearen Effekten wie der Selbstphasenmodulation (SPM) oder der Kreuzphasenmodulation (XPM) Verzerrungen in den zu übertragenen, optischen Signalen hervorgerufen - siehe hierzu Grau und Freude: "Optische Nachrichtentechnik - Eine Einführung", Springer-Verlag, 3. Auflage, 1991, Seite 120 bis 126.

Derartige Verzerrungen des zu übertragenden, optischen Signals bzw. Datensignals sind unter anderem abhängig von der optischen Eingangsleistung des optischen Signals. Durch die durch die chromatische Dispersion und die nichtlinearen Effekte hervorgerufenen Verzerrungen ergibt sich eine regenerationsfreie Übertragungsreichweite für ein optisches Übertragungssystem, die insbesondere durch das für die Wiederherstellung des optischen Signals am Ende eines optischen Faserstreckenabschnitts erforderliche Signal zu Rauschverhältnis bestimmt wird. Hierbei ist unter der regenerationsfrei überbrückbaren Übertragungsreichweite die optische Übertragungsstrecke zu verstehen, über die ein optisches Datensignal übertragen werden kann, ohne daß eine Regeneration bzw. "3 R - Regeneration" (elektronische Datenregeneration hinsichtlich der Amplitude, Flanke und des Taktes eines optischen übermittelten, digitalen Datensignals bzw. Datenstromes) durchgeführt werden muß.

Um derartige Verzerrungen des optischen Datensignals zu kompensieren, werden bei der Übertragung von optischen Signalen über optische Standard-Monomodefasern geeignete Dispersionskompensationseinheiten vorgesehen bzw. ein an die optische Übertragungsstrecke angepaßtes Dispersionsmanagement betrieben. Unter dem Begriff Dispersionsmanagement ist hierbei eine gezielte Anordnung von Dispersionskompensationseinheiten entlang der optischen Übertragungsstrecke (beispielsweise an optischen Sendern, an optischen Zwischenverstärkern und/oder an optischen Empfängern) sowie die Ermittlung der geeigneten Dispersionskompensationsbeträge für die unterschiedlichen Dispersionskompensationseinheiten zu verstehen. Optische Übertragungssysteme setzen sich aufgrund der regenerationsfrei überbrückbaren Übertragungsreichweite aus mehreren optische Faserstreckenabschnitten zusammen, in denen die jeweils in den betrachteten optischen Faserstreckenabschnitt hervorgerufene Faserdispersion mit Hilfe einer Dispersionskompensationseinheit nahezu vollständig oder teilweise über- oder unterkompensiert wird.

Derartige Dispersionskompensationseinheiten sind beispielsweise als optische Spezialfasern ausgestaltet, bei denen durch eine spezielle Wahl des Brechzahlindexprofils im Faserkern und in den umliegenden Mantelschichten der optischen Faser die Dispersion bzw. Faserdispersion, insbesondere im Übertragungswellenlängenbereich sehr hohe negative Werte annimmt. Mit Hilfe der durch die dispersionskompensierende Faser hervorgerufenen, hohen negativen Dispersionswerte können die durch die optischen Übertragungsfasern, beispielsweise eine Standard-Einmodenfaser, erzeugten Dispersionsbeiträge effektiv kompensiert werden. Zusätzlich ist die maximale Anzahl von optischen Faserstreckenabschnitten bzw. die überbrückbare Reichweite des optischen Übertragungssystems durch das Augendiagramm ("Eye Opening") bzw. den Signal-zu-Rausch-Abstand des am Ausgang des jeweiligen optischen Faserstreckenabschnittes vorliegenden optischen Signals bzw. Datensignals festgelegt. Gemäß der für die Rekonstruktion des optischen Datensignals am Ende des optischen Faserstreckenabschnitts erforderlichen "Mindest-Augenöffnung" des Augendiagramms bzw. des hierzu erforderlichen Signal-zu-Rausch-Abstands ergibt sich eine maximale Reichweite für eine regenerationsfreie Übertragung eines optischen Datensignals.

In bislang realisierten optischen Übertragungssystemen werden hierzu unterschiedliche Dispersionsmanagement-Konzepte verfolgt, wobei die optimale Dispersionskompensation einer optischen Übertragungsstrecke durch die Verwendung von vor- und/oder nachkompensierten bzw. unterschiedlich über- oder unterkompensierten optischen Faserstreckenabschnitten durchgeführt werden kann. Abhängig von der jeweiligen Datenrate, dem Datenformat sowie den Fasereigenschaften wird somit eine Überbrückung einer räumlich definierten Entfernung mit einer festgelegten Anzahl von Faserstreckenabschnitten möglich.

Hierzu ist aus der deutschen Patentanmeldung 19945143.5 ein Dispersionskompensationsschema für ein optisches Übertragungssystem bekannt, bei dem optische Signale mit Datenraten um die 10 Gbit/s über eine festgelegte Anzahl von optischen Faserstreckenabschnitten übertragen werden. Zur Erhöhung der Übertragungsreichweite des optischen Übertragungssystems werden die Kompensationsbeträge der Dispersionkompensationseinheit am Ende jedes optischen Faserstreckenabschnitts derart dimensioniert, daß die verbleibende akkumuliert Restdispersion pro optischen Faserstreckenabschnitt zumindest nahezu gleichmäßig um jeweils denselben Dispersionbetrag ansteigt, d.h. die für das gesamte optische Übertragungssystem berechnete oder geschätzte akkumulierte Restdispersion wird nahezugleichmäßig auf die optischen Faserstreckenabschnitte verteilt und hierdurch jeder optische Faserstreckenabschnitt um nahezu denselben Kompensationsbetrag unterkompensiert.

Desweiteren ist aus der US-Patentschrift 5,629,795 ein optisches Übertragungssystem bekannt, das aus mehreren optischen Faserstreckenabschnitten mit jeweils einer optischen Faser und einem dispersionskompensierenden Medium besteht. Das optische Übertragungssystem ist hierzu in eine Vielzahl von optischen Faserstreckenabschnitten aufgeteilt. In jeder dieser optischen Faserstreckenabschnitte - mit Ausnahme des letzten - wird mit Hilfe der dispersionskompensierenden Medien die akkumulierte Wellenlängedispersion mit dem jeweiligen Faserstreckenabschnitt vollständig oder teilweise - Unterkompensation - kompensiert. Durch das beschriebene Vorgehen wird der durch den "Gordon-House"-Effekt im optischen Übertragungssignal hervorgehende "timing jitter" nahezu vollständig eliminiert. Die hierbei übertragenen optischen Signale werden in "Return-to-Zero"-Format mit einer Übertragungsrate von ca. 20 Gbit/s übertragen. Ein derartiges Dispersionsmanagement führt zwar bei Übertragungsbitraten von 20 Gbit/s zur Reduzierung der durch den "Gorden-House-Effekt" hervorgerufenen "timing jitter", jedoch kann hierdurch keine wesentliche Reichweitenverbesserung, insbesondere bei hochbitratigen optischen Übertragungssystemen mit Datenübertragungsraten größer als 20 Gbit/s erzielt werden.

Das Dokument "Ultralong Lightwave Systems with Incomplete Dispersion Compensations", Senfar Wen und Tsung-Kun Lin, Journal of Lightwave Technology, Vol 19, Nr 4, April 2001, Seite 471 bis 479 ist Nächstliegender Stand der Tecknik gemäß dem Oberbegriff des Anspruchs 1.

Die Aufgabe der vorliegenden Erfindung besteht also darin, ein optisches Übertragungssystem zur hochbitratigen Übertragung von optischen Signalen der eingangs erwähnten Art derart auszugestalten, daß die durch die Faserdispersion hervorgerufenen Signalverzerrungen reduziert werden und somit die regenerationsfrei überbrückbare Übertragungsreichweite erhöht wird. Die Aufgabe wird ausgehend von den im Oberbegriff von Patentanspruch 1 angegebenen Merkmalen durch dessen kennzeichnende Merkmale gelöst.

Der wesentliche Aspekt der Erfindung ist darin zu sehen, daß die Kompensationsbeträge der ersten bis N-ten Dispersionskompensationseinheit derart dimensioniert sind, daß der erste bis N-1-te Faserstreckenabschnitt jeweils um annähernd denselben Überkompensationsbetrag überkompensiert ist und

daß der Kompensationsbetrag der N-te Dispersionskompensationseinheit derart dimensioniert ist, daß die akkumulierte Faserdispersion am Ausgang des optischen Übertragungssystems nahezu vollständig kompensiert ist wobei der erfindungsgemäße Überkompensationsbetrag durch den Quotienten aus einem berechneten oder geschätzten Gesamtkompensationsbetrag und der Anzahl N der Faserstreckenabschnitte festgelegt ist. Vorteilhaft wird durch eine derartige Dimensionierung der Kompensationsbeträge die maximale regenerationsfreie Übertragungsreichweite bei gleichbleibender mittlerer Eingangssignalleistung pro Faserstreckenabschnitt wesentlich erhöht und somit die durch Nichtlinearitäten, beispielsweise der Selbstphasenmodulation oder der Kreuzphasenmodultion, vorgegebene Einschränkung der maximalen Reichweite wesentlich verringert. Durch das erfindungsgemäße Dispersionsmanagement wird außerdem auch eine Erhöhung der maximal in das optische Übertragungssystem einkoppelbaren Gesamtleistung der optischen Signale möglich, wodurch eine zusätzliche Reichweitenerhöhung erreicht werden kann.

Ferner ergibt sich dieser Gesamtkompensationsbetrag ausgehend von der maximal in das optische Übertragungssystem einkoppelbaren Gesamtleistung der optischen Signale durch Berechnung oder Schätzung. Hierbei ist die maximal in das optische Übertragungssystem einkoppelbare Gesamtleistung der optischen Signale gleich dem Produkt aus der Anzahl N der Faserstreckenabschnitte und der durchschnittlichen Eingangsleistung pro Faserstreckenabschnitt und somit konstant. Ferner ist der Gesamtkompensationsbetrag abhängig von der Datenrate, dem Datenformat und dem Fasertyp. Vorteilhaft wird erfindungsgemäß beispielsweise durch eine rechnergestützte Simulation des optischen Übertragungssystems bzw. durch experimentelle Untersuchungen die bei dem vorliegenden Systemeigenschaften des optische Übertragungssystem maximal einkoppelbare Gesamtleistung $P_{max}$ ermittelt und beispielsweise ausgehend von der durchschnittlichen Eingangsleistung pro Faserstreckenabschnitt $P_{launch}$ die Anzahl N der regenerationsfrei überbrückbaren optischen Faserstreckenabschnitte ermittelt. Hierzu wird der aus der Veröffentlichung "Optimised dispersion management scheme for long-haul optimal communication systems" von A. Färbert, et al., Electronic Letters, vol. 35, no. 21, p. 1865-1866, 1999 bekannte Zusammenhang

$$P_{max} = P_{launch} * N = const.$$

ausgewertet.

Vorteilhaft ist zur Übertragung der optischen Signale das "Non-Return-to-Zero"-Datenformat (NRZ) oder das "Return-to-Zero"-Datenformat (RZ) vorgesehen. Bei der Übertragung der optischen Signale im NRZ-Datenformat wird durch das erfindungsgemäße Dispersionsmanagementschema die regenerationsfreie Übertragungsreichweite deutlich vergrößert, wohingegen beim RZ-Datenformat die Erhöhung der regenerationsfreien Übertragungsreichweite geringer ausfällt.

Vorteilhafte Weiterbildungen und Ausbildung des erfindungsgemäßen optischen Übertragungssystems sind den weiteren Ansprüchen zu entnehmen.

Ein Ausführungsbeispiel der Erfindung wird im folgenden anhand eines Prinzipschaltbildes und mehrerer Diagramme näher erläutert.

Figur 1      zeigt den prinzipiellen Aufbau eines optischen Übertragungssystems,

Figur 2      zeigt in einem Diagramm das erfindungsgemäße Dispersionsmanagementschema,

Figur 3 a,b      zeigt in einem weiteren Diagramm die regenerationsfrei überbrückbare Anzahl der kompensierten Faserstreckenabschnitte in Abhängigkeit von den gewählten Dispersionskompensationsbeträgen bei unterschiedlichen durchschnittlichen Eingangssignalleistungen und

Figur 4      zeigt in einen weiteren Diagramm die regenerationsfrei überbrückbare Anzahl der kompensierten Faserstreckenabschnitte in Abhängigkeit von den gewählten Dispersionskompensationsbeträgen für unterschiedliche Datenraten.

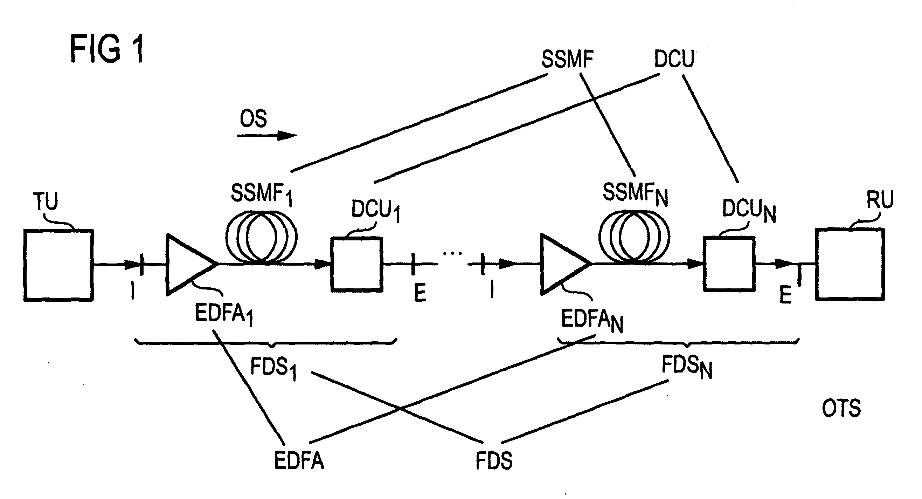

In Figur 1 ist ein optisches Übertragungssystem OTS schematisch dargestellt, das eine optische Sendeeinrichtung TU und eine optische Empfangseinrichtung RU aufweist. Die optische Sendeeinrichtung TU ist über N optische, jeweils einen Eingang I und einen Ausgang E aufweisende Faserstreckenabschnitte $FDS_1$ bis $FDS_N$ mit der optischen Empfangseinrichtung RU verbunden, die jeweils einen optischen Verstärker EDFA, eine optische Faser SSMF und eine optische Dispersionskompensationseinheit DCU aufweisen.

In Figur 1 sind beispielhaft ein erster und N-ter optischer Faserstreckenabschnitt $FDS_1$, $FDS_N$ dargestellt, wobei ein zweiter bis N-1-ter Faserstreckenabschnitt $FDS_2$ bis $FDS_{N-1}$ anhand einer punktierten Linie angedeutet sind. Desweiteren besteht der erste optische Faserstreckenabschnitt $FDS_1$ aus einem ersten optischen Verstärker $EDFA_1$, einer ersten optischen Faser $SSMF_1$, beispielsweise einer optischen Standard-Einmodenfaser bzw. Standard-Single-Mode-Faser (SSMF), sowie aus einer ersten optischen Dispersionskompensationseinheit $DCU_1$, wobei zwischen der ersten optischen Faser $SSMF_1$ und der ersten optischen Dispersionskompensationseinheit $DCU_1$ noch ein optischer Vorverstärker - in Figur 1 nicht dargestellt - vorgesehen werden kann. Analog dazu weist der N-te optische Faserstreckenabschnitt $FDS_N$ einen N-ten optischen Verstärker $EFDA_N$, eine N-te optische Faser $SSMF_N$ und eine N-te optische Dispersionskompensationseinheit $DCU_N$ auf. Analog kann auch zwischen der N-ten optischen Faser $SSMF_N$ und der N-ten optischen Dispersionskompensationseinheit $DCU_N$ ein weiterer optischer Vorverstärker - in Figur 1 nicht dargestellt - vorgesehen sein. Die N optischen Dispersionskompensationseinheiten $DCU_1$ bis $DCU_N$ weisen jeweils unterschiedliche Kompensationsbeträge $D_1$ bis $D_N$ auf.

Das optische Datensignal bzw. der optische Datenstrom OS wird von der optischen Sendeeinrichtung TU zum Eingang I des ersten optischen Faserstreckenabschnitt $FDS_1$ übermittelt. Innerhalb des ersten optischen Faserstreckenabschnitts $FDS_1$ wird das optische Datensignal OS mit Hilfe des ersten optischen Verstärker $EDFA_1$ verstärkt und über die erste optische Faser $SSMF_1$ zur ersten Dispersionskompensationseinheit $DCU_1$ übertragen. In der ersten Dispersionskompensationseinheit $DCU_1$ wird die durch die optische Übertragung über die erste optische Faser $SSMF_1$ hervorgerufenen Faserdispersion des optischen Datensignals OS um den erfindungsgemäßen Überkompensationsbetrag $D_{Über}$ überkompensiert, d.h. der erste Kompensationsbetrag $D_1$ der ersten Dispersionskompensationseinheit $DCU_1$ überschreitet annähernd um den erfindungsgemäßen Überkompensationsbetrag $D_{Über}$ die in dem ersten Faserstreckenabschnitt $FDS_1$ hervorgerufene Faserdispersion d. Der Überkompensationsbetrag $D_{Über}$ ist erfindungsgemäß durch den Quotienten aus einem für das betrachtete optische Übertragungssystem OTS berechneten oder geschätzten Gesamtkompensationsbetrag $D_{total}$ und der Anzahl N der Faserstreckenabschnitte $FDS_1$ bis $FDS_N$ des optischen Übertragungssystems OTS festgelegt, d.h.

$$D_{Über} = D_{total}/N \; ;$$

Hieraus ergibt sich für die nach der Kompensation am Ende des ersten Faserstreckenabschnitts $FDS_1$ resultierenden akkumulierte Faserdispersion $d_{akk}$ ein negativer Betrag.

Der Gesamtdispersionsbetrag $D_{total}$ wird durch die Systemeigenschaften und/oder durch die Fasernichtlinearitäten sowie die Faserdispersion bei verschiedenen Datenübertragungsraten und Datenübertragungsformaten unterschiedlich beeinflußt. Dieser Gesamtdispersionsbetrags $D_{total}$ wird deshalb erfindungsgemäß anhand von rechnergestützten Simulationen oder experimentellen Untersuchungen jeweils für die Systemeigenschaften des betrachteten optischen Übertragungssystem OTS ausgehend von der maximal in das optische Übertragungssystem OTS einkoppelbare Gesamtleistung $P_{max}$ ermittelt. Hierbei ist durch die maximal in das optische Übertragungssystem OTS einkoppelbare Gesamtleistung $P_{max}$ gemäß dem Zusammenhang

$$P_{max} = P_{launch} * N$$

die bei der betrachteten Gesamtleistung $P_{max}$ regenerationsfrei überbrückbare Anzahl N der optischen Faserstreckenabschnitte durch die Wahl der mittleren Eingangsleistung $P_{launch}$ pro Faserstreckenabschnitt FDS

berechenbar.

Der Gesamtkompensationsbetrag $D_{total}$ gibt den für die Rückgewinnung der Daten aus dem optischen Datensignal OS erforderlichen Mindestkompensationsbetrag für ein aus zwei optischen Faserstreckenabschnitten $FDS_1$, $FDS_2$ aufgebauten optischen Übertragungssystem OTS an, um den beispielsweise der erste optische Faserstreckenabschnitt $FDS_1$ kompensiert werden müßte, um das für eine fehlerfreie Rekonstruktion des übertragenen Datensignals OS erforderliche Signal-zu-Rausch-Verhältnis am Ende des zweiten Faserstreckenabschnitts $FDS_2$ zu erhalten.

Das am Ende E des ersten optischen Faserstreckenabschnitts $FDS_1$ empfangene optische Datensignal OS wird an den Eingang I des zweiten optischen Faserstreckenabschnitts $FDS_2$ geführt. Hierbei wird das optische Datensignal OS wiederum durch den zweiten optischen Verstärker $EDFA_2$ verstärkt und über die zweite optische Faser $SSMF_2$ zur zweiten Dispersionskompensationseinheit $DCU_2$ übertragen. Durch die zweite Dispersionskompensationseinheit $DCU_2$ mit einem zweiten Kompensationsbetrag $D_2$ wird die in der zweiten optischen Faser $SSMF_2$ hervorgerufene Faserdispersion d derart kompensiert, daß wiederum eine Überkompensation um annähernd denselben Überkompensationsbetrag $D_{Über}$ des zweiten Faserstreckenabschnitt $FDS_2$ durchgeführt wird. Somit weist der zweite Faserstreckenabschnitt $FDS_2$ im betrachteten Ausführungsbeispiel eine akkumulierte Faserdispersion $d_{akk}$ von annähernd den zweifachen negativen Überkompensationsbetrag $D_{Über}$ auf. Analog hierzu wird in den dritten bis N-1-ten Faserstreckenabschnitten $FDS_3$ bis $FDS_{N-1}$ die erfindungsgemäße Überkompensation durchgeführt.

Das am Eingang I des N-ten optischen Faserstreckenabschnittes $FDS_N$ empfangene optische Datensignal OS wird mit Hilfe des N-ten optischen Verstärker $EDFA_N$ verstärkt und über die N-te optische Faser $SSMF_N$ zu der N-ten Dispersonskompensationseinheit $DCU_N$ übermittelt. In der N-ten Dispersionskompensationseinheit $DCU_N$ wird die von der N-ten optischen Faser $SSMF_N$ hervorgerufene Faserdispersion d des optischen Datensignals OS soweit kompensiert, daß die akkumulierte Faserdispersion $d_{akk}$ des optischen Datensignals OS nahezu vollständig kompensiert ist, d.h. der N-te Kompensationsbetrag $D_N$ der N-ten Dispersionskompensationseinheit $DCU_N$ ist derart dimensioniert, daß die akkumulierte Faserdispersion $d_{akk}$ am Ausgang E des optischen Übertragungssystems OTS nahezu vollständig kompensiert ist. Das am Ausgang E des N-ten optischen Faserstreckenabschnitts $FDS_N$ anliegende optische Datensignal OS wird zur optischen Empfangseinrichtung RU übertragen und gegebenenfalls vor der Weiterverarbeitung einer "3R"-Regeneration unterzogen - nicht in Figur 1 dargestellt.

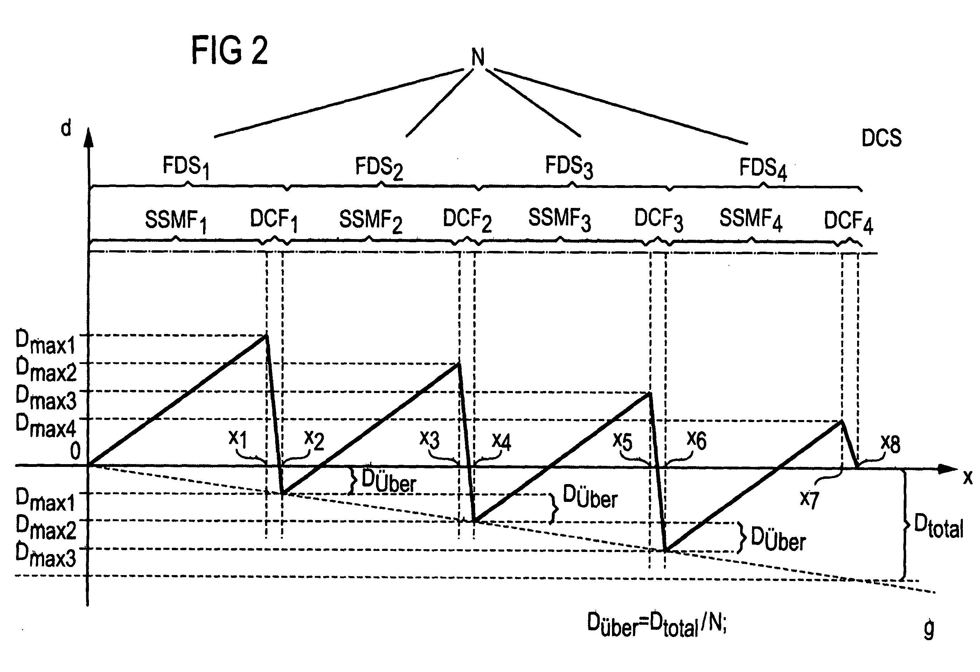

In Figur 2 ist ein erfindungsgemäßes Dispersionsmanagementschema DCS anhand eines Diagramms beispielhaft dargestellt. Hieraus wird wiederum deutlich, daß sich das optische Übertragungssystem OTS erfindungsgemäß aus mehreren optischen Faserstreckenabschnitten FDS zusammensetzt, die jeweils eine optische Faser SSMF und eine Dispersionskompensationseinheit DCU, beispielsweise eine dispersionskompensierende Faser, aufweisen. Zur Erläuterung des erfindungsgemäßen Dispersionsmanagementschemas DCS ist die Anzahl der optischen Faserstreckenabschnitte auf vier (N=4) beschränkt, so daß sich in Figur 2 ein erster, zweiter, dritter und vierter optischer Faserstreckenabschnitt $FDS_1$, $FDS_2$, $FDS_3$, $FDS_4$ ergeben, wobei der erste optische Faserstreckenabschnitt $FDS_1$ eine erste optische Faser $SSMF_1$ und eine erste optische Dispersionskompensationseinheit $DCU_1$, der zweite optische Faserstreckenabschnitt $FDS_2$ eine zweite optische Faser $SSMF_2$ und eine zweite optische Dispersionskompensationseinheit $DCU_2$, der dritte optische Faserstreckenabschnitt $FDS_3$ eine dritte optische Faser $SSMF_3$ und eine dritte optische Dispersionskompensationseinheit $DCU_3$ und der vierte optische Faserstreckenabschnitt $FDS_4$ eine vierte optische Faser $SSMF_4$ und eine vierte optische Dispersionskompensationseinheit $DCU_4$ aufweist. Hierbei ist für das Dispersionsmanagementschema DCS des Ausführungsbeispiels beispielsweise eine nahezu gleiche Länge für die erste bis vierte optische Faser $SSMF_1$ bis $SSMF_4$ sowie für die erste bis dritte dispersionskompensierende Faser $DCU_1$ bis $DCU_3$ gewählt. Für das erfindungsgemäße Dispersionsmanagementschema DCS ist jedoch die Länge der optischen Fasern SSMF, sofern diese 20 km überschreiten, unerheblich. Ferner kann auch die Länge der dispersionskompensierenden Fasern bzw. die Kompensationsbeträge D der Dispersionskompensationseinheiten DCU varieren, sofern die Summe der Kompensationsbeträge annähernd dem berechneten oder geschätzten Gesamtdispersionsbetrag $D_{total}$ entspricht.

Das Diagramm weist eine horizontale (Abszisse) und eine vertikale Achse (Ordinate) x,d auf, wobei entlang der horizontalen Achse die Entfernung x von der optischen Sendeeinrichtung TU bzw. die Reichweite der optischen Datenübertragung und entlang der vertikalen Achse d die Faserdispersion d aufgetragen ist.

Anhand Figur 2 wird deutlich, daß die Faserdispersion d eines am Eingang I des ersten optischen Faserstreckenabschnitts $FDS_1$ anliegenden optischen Datensignals OS von der optischen Sendeeinrichtung TU (x=0) entlang der ersten optischen Faser $SSMF_1$ linear ansteigt und am Ende der ersten optischen Faser $x_1$ einen ersten maximalen Dispersionsbetrag $D_{max1}$ annimmt. Der erste maximale Dispersionsbetrag $D_{max1}$ wird mit Hilfe der ersten Dispersionskompensationseinheit $DCU_1$ bzw. der ersten dispersionskompensierenden Faser überkompensiert, d.h. am Ende der ersten dispersionskompensierenden Faser $x_2$ liegt ein erster minimaler Dispersionsbetrag $D_{min1}$ vor, der dem erfindungsgemäßen Überkompensationsbetrag $D_{Über}$ allerdings mit negativem Vorzeichen entspricht.

Durch die sich anschließende zweite optische Faser $SSMF_2$ nimmt die Faserdispersion d von dem ersten minimalen Dispersionsbetrag $D_{min1}$ bis zu einem zweiten maximalen Dispersionsbetrag $D_{max2}$ zu, welcher am Ende der zweiten optischen Faser $x_3$ vorliegt. Der zweite maximale Dispersionsbetrag $D_{max2}$ hat sich im Vergleich zum ersten maximalen Dispersionsbetrag $D_{max1}$ annähernd um den erfindungsgemäßen Überkompensationsbetrag $D_{Über}$ verringert, d.h. die im ersten Faserstreckenabschnitt $FDS_1$ vorliegende Überkompensation hat eine vorkompensierende Wirkung auf den folgenden zweiten Faserstreckenabschnitt $FDS_2$. Der zweite maximale Dispersionsbetrag $D_{max2}$ wird mit Hilfe der zweiten Dispersionskompensationseinheit $DCU_2$ bzw. der zweiten dispersionskompensierenden Faser soweit kompensiert bis der zweite minimale Dispersionsbetrag $D_{min2}$ annähernd dem Zweifachen des erfindungsgemäßen Überkompensationsbetrags $2*D_{Über}$ entspricht, d.h. die akkumulierte Faserdispersion $d_{akk}$ steigt nahezu gleichmäßig pro optischen Faserstreckenabschnitt FDS jeweils um den Überkompensationsbetrag $D_{Über}$ an. Somit liegt am Ende der zweiten dispersionskompensierenden Faser $x_4$ ein zweiter minimaler Dispersionsbetrag $D_{min2}$ vor, der dem Zweifachen des erfindungsgemäßen Überkompensationsbetrags $D_{Über}$ mit negativem Vorzeichen entspricht.

Das von der zweiten dispersionskompensierenden Faser $DCU_2$ an die dritte optische Faser $SSMF_3$ übermittelte optische Datensignal OS erfährt in der dritten optischen Faser $SSMF_3$ wiederum durch die Faserdispersion d hervorgerufene Signalverzerrungen. Die Faserdispersion d nimmt somit am Ende der dritten optischen Faser $x_5$ einen dritten maximalen Dispersionsbetrag $D_{max3}$ an, der wiederum um annähernd den erfindungsgemäßen Überkompensationsbetrag $D_{Über}$ kleiner ist als der zweite maximale Dispersionsbetrag $D_{max2}$. Der dritte maximale Dispersionsbetrag $D_{max3}$ wird durch die dritte optische Dispersionskompensationseinheit $DCU_3$ derartig überkompensiert, daß der dritte minimale Dispersionsbetrag $D_{min3}$ dem Dreifachen des erfindungsgemäßen Überkompensationsbetrages $D_{Über}$ mit negativem Vorzeichen entspricht.

Ferner ist aus Figur 2 ersichtlich, daß im vierten Faserstreckenabschnitt $FDS_4$ die Faserdispersion d weiterhin zunimmt und am Ende der vierten optischen Faser $x_7$ einen vierten maximalen Dispersionsbetrag $D_{max4}$ aufweist. Mit Hilfe der vierten Dispersionskompensationseinheit $DCU_4$ wird der vierte maximale Dispersionsbetrag $D_{max4}$ erfindungsgemäß derart reduziert, daß die am Ende des vierten Faserstreckenabschnitts $x_8$, d.h. am Ausgang E des optischen Übertragungssystems OTS, die akkumulierte Faserdispersion $d_{akk}$ nahezu vollständig kompensiert ist. Somit wird im betrachteten Ausführungsbeispiel eine Unterkompensation im vierten Faserstreckenabschnitt $FDS_4$ mit den Ziel einer Vollkompensation der gesamten akkumulierten Faserdispersion $d_{akk}$ durchgeführt.

Durch das erfindungsgemäße gleichmäßige "Aufteilen" des für das jeweilige optische Übertragungssystem OTS berechneten bzw. geschätzten Gesamtkompensationsbetrag $D_{total}$ auf eine festgelegte Anzahl N von Faserstreckenabschnitte FDS anhand des erfindungsgemäßen Überkompensationsbetrags $D_{Über}$, wobei der letzte bzw. N-te Faserstreckenabschnitt $FDS_N$ vollständig kompensiert wird, wird die regenerationsfrei überbrückbare Übertragungsreichweite $x_8$ mehr als verdoppelt.

Somit kann im Vergleich zur vollständigen Kompensation der Faserdispersion d pro Faserstreckenabschnitt FDS durch das erfindungsgemäße Dispersionsmanagementschema DCS der verteilten Überkompensation die regenerationsfrei überbrückbare Reichweite erheblich erhöht werden, wodurch bei nahezu gleichbleibender Gesamteingangsleistung $P_{max}$ die Anzahl N der überbrückbaren Faserstreckenabschnitte FDS verdoppelt werden kann.

Zusätzlich kann ein eine optische Faser SSMF und eine Dispersionskompensationseinheit DCF aufweisender Faserstreckenabschnitt FDS als optisches Übertragungsmodul ausgestaltet sein. Hierdurch kann das optische Übertragungssystem OTS durch eine Serienschaltung derartiger optischer Übertragungsmodule gebildet werden. Eine derartige modulare Bauweise erleichtert die Realisierung einer optischen Übertragungsstrecke bzw. Erweiterung einer bestehenden optischen Übertragungsstrecke OTS in der Praxis erheblich.

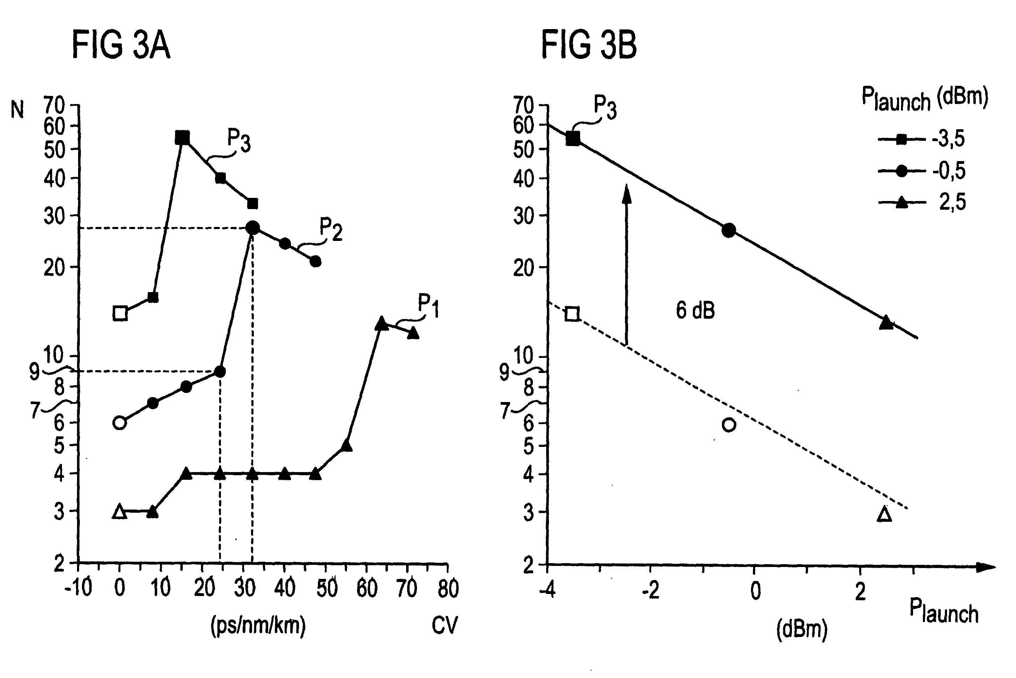

In Figur 3a ist in einem weiteren Diagramm die regenerationsfrei überbrückbare Anzahl N der kompensierten Faserstreckenabschnitte FDS in Abhängigkeit von der verteilten Überkompensation CV für unterschiedliche durchschnittliche Eingangsleistungen $P_{launch}$ des optischen Datensignals OS und in Figur 3b in Abhängigkeit der durchschnittlichen Eingangsleistungen $P_{launch}$ dargestellt. Die in Figur 3a und 3b dargestellten Kurvenverläufe repräsentieren das Systemverhalten eines optischen Übertragungssystems OTS mit einer optischen Standard-Einmodenfaser SSMF, wobei die optischen Datensignale OS im NRZ-Datenübertragungsformat und mit einer Datenübertragungsrate von 40 Gbit/s übertragen werden.

Das in Figur 3a dargestellt Diagramm weist eine horizontale Achse (Abszisse) CV und eine vertikale Achse (Ordinate) N auf, wobei an der horizontalen Achse CV die zur Dispersionskompensation vorgesehene mittleren Kompensationsbeträge CV in ps/nm/km angetragen sind und entlang der vertikalen Achse N die Anzahl N der regenerationsfrei überbrückbaren Faserstreckenabschnitte FDS des optischen Übertragungssystems OTS dargestellt ist. Hierbei bedeutet ein an der horizontalen Achse CV angetragener Kompensationsbetrag D von 0 ps/nm/km eine Vollkompensation der in dem jeweiligen Faserstreckenabschnitt FDS entstehenden Faserdispersion d, d.h. alle Kompensationsbeträge D größer als der dargestellte Wert von 0 ps/nm/km entsprechen einer mittleren Überkompensation der betrachteten Faserstreckenabschnitte FDS.

In Figur 3a sind eine erste, zweite und dritte Kurve $P_1, P_2, P_3$ dargestellt, die die Zunahme der Anzahl N der regenerationsfrei überbrückenbaren Faserstreckenabschnitte FDS bei unterschiedlichen mittleren Kompensationsbeträgen D für unterschiedliche mittlere Eingangsleistungen $P_{launch}$ der optischen Datensignale OS pro Faserstreckenabschnitt FDS anzeigen. Im Falle der ersten Kurve $P_1$ weist das optische Datensignal OS eine mittlere Eingangsleistungen $P_{launch}$ pro Faserstreckenabschnitt FDS von 2.5 dBm, bei der zweiten Kurve $P_2$ von -0.5 dBm und bei der dritten Kurve $P_3$ von -3,5 dBm auf. Anhand der Zunahme der Anzahl N der überbrückbaren Faserstreckenabschnitte FDS von der ersten bis zur dritten Kurve $P_1$ bis $P_3$ läßt sich deutlich die Gesetzmäßigkeit der konstanten Gesamteingangsleistung $P_{max}$ erkennen, die durch das Produkt aus der Anzahl N der Faserstreckenabschnitte FDS und der mittleren Eingangsleistungen $P_{launch}$ gegeben ist. Generell ist aus dem Anstieg der dargestellten ersten bis dritten Kurvenverläufe $P_1, P_2, P_3$ die Zunahme der Anzahl N der regenerationsfrei überbrückbaren Faserstreckenabschnitte FDS mit zunehmender Überkompensation bis zum erfindungsgemäßen Überkompensationsbetrag $D_{Über}$ erkennbar. So ist bei der zweiten Kurve $P_2$ durch eine Erhöhung der mittleren Überkompensation von 24,5 ps/nm/km auf den erfindungsgemäßen Überkompensationsbetrag $D_{Über}$ von beispielsweise 32 ps/nm/km eine Erhöhung der Anzahl N von 9 auf ca. 28 möglich.

Die maximale Erhöhung der Anzahl N der regenerationsfrei überbrückbaren Faserstreckenabschnitt FDS ist in Figur 3b in Abhängigkeit von der mittleren Eingangsleistung $P_{launch}$ pro Faserstreckenabschnitt FDS dargestellt. Hierzu sind die minimalen und maximalen Anzahlen N der regenerationsfrei überbrückbaren Faserstreckenabschnitte FDS aus Figur 3a zum Vergleich für die jeweilige erste, zweite und dritte mittlere Eingangsleistung $P_{launch}$ der ersten, zweiten und dritten Kurve $P_1, P_2, P_3$ angetragen. Aus den Kurvenverläufen ist eine durchschnittliche Verbesserung der regenerationsfrei überbrückbaren Anzahl N von Faserstreckenabschnitten FDS um 6 dB ersichtlich.

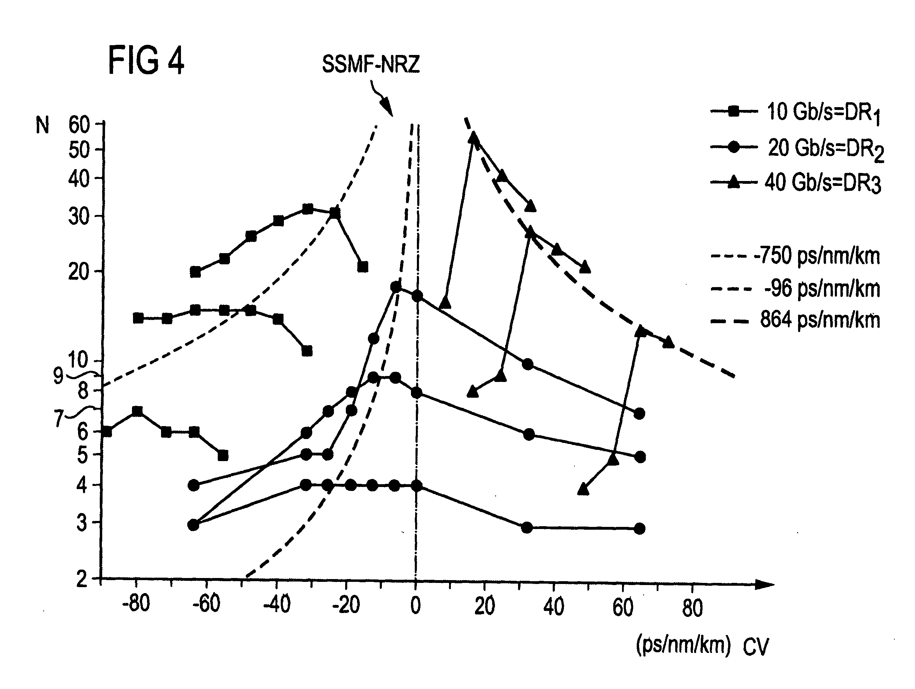

In Figur 4 ist in einem weiteren Diagramm die regenerationsfrei überbrückbare Anzahl N der kompensierten Faserstreckenabschnitte in Abhängigkeit von den gewählten mittleren Dispersionskompensationsbeträgen CV für eine erste, zweite und dritte Datenrate $DR_1, DR_2, DR_3$ dargestellt. Als Meßsystem lag wiederum ein aus optischen Standard-Einmodenfasern SSMF aufgebautes optisches Übertragungssystem OTS zur Verfügung, bei dem die optischen Datensignale OS im NRZ-Datenformat NRZ und mit einer Datenrate von 40 Gbit/s übertragen wurden.

Die in Figur 3a dargestellten sich durch die unterschiedlichen mittleren Eingangsleistungen $P_{launch}$ unterscheidenden Kurven $P_1, P_2, P_3$ sind in Figur 4 jeweils für eine erste Datenrate $DR_1$ von 10 Gbit/s, eine zweite Datenrate $DR_2$ von 20 Gbit/s sowie eine dritte Datenrate $DR_3$ von 40 Gbit/s dargestellt. Aus den Kurvenverläufen wird deutlich, daß bei der ersten Datenrate $DR_1$ eine verteilte Unterkompensation, bei der zweiten Datenrate $DR_2$ eine nahezu Vollkompensation und bei der dritten Datenrate $DR_3$ ein Überkompensation zu einer Erhöhung der Anzahl N der regenerationsfrei überbrückbaren Faserstreckenabschnitten FDS führt. Hieraus wird der Übergang von verteilter Unterkompensation bei niedrigeren Bitraten (ca. 10 Gbit/s) zu der erfindungsgemäßen verteilten Überkompensation bei höheren Bitraten (ca. 40 Gbit/s) deutlich, der durch eine von den Transmissionsfaserparameter der optischen Faser SSMF abhängigen kritischen Datenrate $DR_{krit}$ festgelegt ist. Bei einer Standard-Einmodenfaser SSMF mit einer Faserdispersion d von 17 ps/nm/km liegt diese kritische Datenrate $DR_{krit}$ bei ca. 25 Gbit/s. Bei einer dispersionsverschobenen Fasern, wie beispielsweise einer "Non-zero dispersion-shifted fiber (NZDSF), mit beispielsweise einer Faserdispersion d von 4 ps/nm/km kann die kritische Datenrate $DR_{krit}$ auf ca. 50 Gbit/s ansteigen. Die kritischen Datenraten $DR_{krit}$ von optischen Fasern mit anderen Faserdispersionswerten d lassen sich über die folgende Beziehung interpolieren:

$$DR_{krit} = const. / \sqrt{d}$$

Ferner ist aus den in Figur 4 dargestellten Kurvenverläufen ersichtlich, daß die maximale Anzahl N der überbrückbaren Faserstreckenabschnitte FDS mit unterschiedlichen mittleren Eingangsleistungen $P_{launch}$ für eine Datenrate DR auf einer 1/x-Kurve zu liegen kommen. Dies zeigt, daß das Produkt aus der maximalen Anzahl N der regenerationsfrei überbrückbaren Faserstreckenabschnitte FDS und dem erfindungsgemäßen Überkompensationsbetrag $D_{Über}$, der dem mittleren Kompensationsbetrag CV beispielsweise bei einer dritten Datenrate $DR_3$ von 40 Gbit/s entspricht, konstant ist, d.h.:

$$D_{Über} * N = const.$$

Das erfindungsgemäße Dispersionskompensationsschema DCS für hochbitratige optische Datenübertragung ist keinesfalls auf optische Übertragungssysteme OTS mit optischen Standard-Einmodenfasern beschränkt, sondern kann auch bei optischen Übertragungssystemen OTS mit anderen Fasertypen, beispielsweise dispersionsverschobenen optischen Fasern, eingesetzt werden. Ferner ist das erfindungsgemäße Dispersionskompensationsschema auch auf optische Übertragungssysteme OTS, die zur Übertragung von optischen Signalen OS weitere, nicht explizit genannte Datenübertragungsformate verwenden, anwendbar.

**Patentansprüche**

1. Optisches Übertragungssystem (OTS) zur hochbitratigen Übertragung von optischen Signalen (OS) bestehend aus N optischen Faserstreckenabschnitten (FDS) mit jeweils einer optischen Faser (SSMF) und einer Dispersionskompensationseinheit (DCU), bei dem die Kompensationsbeträge ($D_1$ bis $D_{N-1}$) der ersten bis N-ten Dispersionskompensationseinheit ($DCU_1$ bis $DCU_{N-1}$) derart dimensioniert sind, dass der erste bis N-1-te Faserstreckenabschnitt ($FDS_1$ bis $FDS_{N-1}$) jeweils um annähernd denselben Überkompensationsbetrag ($D_{Über}$) überkompensiert ist, und der Kompensationsbetrag ($D_N$) der N-ten Dispersionskompensationseinheit ($DCU_N$) derart dimensioniert ist, dass die akkumulierte Faserdispersion ($d_{akk}$) der optischen Signale (OS) am Ausgang (E) des optischen Übertragungssystems (OTS) nahezu vollständig kompensiert ist,
**dadurch gekennzeichnet,**
**dass** der Überkompensationsbetrag ($D_{Über}$) durch den Quotienten aus einem berechneten oder geschätzten Gesamtkompensationsbetrag ($D_{total}$) und der Anzahl N der Faserstreckenabschnitte ($FDS_1$ bis $FDS_N$) festgelegt ist.

2. Optisches Übertragungssystem nach Anspruch 1,
**dadurch gekennzeichnet,**
**dass** sich ausgehend von der maximal in das optische Obertragungssystem (OTS) einkoppelbaren Gesamtleistung ($P_{max}$) der optischen Signale (OS) der Gesamtkompensationsbetrag ($D_{total}$) durch Berechnung oder Schätzung ergibt.

3. Optisches Übertragungssystem nach Anspruch 1 oder 2,
**dadurch gekennzeichnet,**
**dass** der Gesamtkompensationsbetrag ($D_{total}$) abhängig von der Datenrate ($DR_1$, $DR_2$, $DR_3$), dem Datenformat (NRZ, RZ) und dem Fasertyp (SSMF, NZDSF) ist.

4. Optisches Übertragungssystem nach Anspruch 3,
**dadurch gekennzeichnet,**
**dass** die maximal in das optische Übertragungssystem (OTS) einkoppelbare Gesamtleistung ($P_{max}$) der optischen Signale (OS) gleich dem Produkt aus der Anzahl N der Faserstreckenabschnitte ($FDS_1$ bis $FDS_N$) und der durchschnittlichen Eingangsleistung ($P_{launch}$) pro Faserstreckenabschnitt ($FDS_1$ bis $FDS_N$) ist.

5. Optisches Übertragungssystem nach einem der Ansprüche 1 bis 4,
**dadurch gekennzeichnet,**
**dass** zur hochbitratigen Übertragung der optischen Signale (OS) Datenraten größer als 20 Gbit/s vorgesehen sind.

6. Optisches Übertragungssystem nach einem der Ansprüche 1 bis 5,
**dadurch gekennzeichnet,**
**dass** zur Übertragung der optischen Signale das "Non-Return-to-Zero"-Datenformat NRZ oder das "Return-to-Zero"-Datenformat RZ vorgesehen ist.

7. Optisches Übertragungssystem nach einem der Ansprüche 1 bis 6,
**dadurch gekennzeichnet,**
**dass** in den Faserstreckenabschnitten ($FDS_1$ bis $FDS_N$) optische Fasern ($SSMF_1$ bis $SSMF_N$) mit einer Mindestlänge von 20 Kilometer vorgesehen sind.

8. Optisches Übertragungssystem nach einem der Ansprüche 1 bis 7,
**dadurch gekennzeichnet,**
**dass** die optische Faser ($SSMF_1$ bis $SSMF_N$) eines Faserstreckenabschnitts als Standard-Einmodenfaser (SSMF) oder als dispersionsverschobene optische Faser (NZDSF) ausgestaltet ist.

9. Optisches Übertragungssystem nach einem der Ansprüche 1 bis 8,
**dadurch gekennzeichnet,**
**dass** durch einen eine optische Faser (SSMF) und eine Dispersionskompensationseinheit (DCF) aufweisenden Faserstreckenabschnitt (FDS) ein optisches Übertragungsmodul realisiert ist und
**dass** das optische Übertragungssystem (OTS) aus mehreren in Serie angeordneten optischen Übertragungsmodulen aufgebaut ist.

**Claims**

1. Optical transmission system (OTS) for high-bit-rate transmission of optical signals (OS), comprising N optical fibre link sections (FDS) with in each case one optical fibre (SSMF) and one dispersion compensation unit (DCU), in which the absolute-magnitude compensations ($D_1$ to $D_{N-1}$) of the first to Nth dispersion compensation units ($DCU_1$ to $DCU_{N-1}$) are dimensioned in such a way that the first to N-1-th fibre link sections ($FDS_1$ to $FDS_{N-1}$) is/are overcompensated in each case by approximately the same absolute-magnitude overcompensation ($D_{over}$), and the absolute-magnitude compensation ($D_N$) of the Nth dispersion compensation unit ($DCU_N$) is dimensioned in such a way that the accumulated fibre dispersion ($d_{akk}$) of the optical signals (OS) at the output (E) of the optical transmission system (OTS) is virtually completely compensated, **characterized in that** the absolute-magnitude overcompensation ($D_{over}$) is fixed by the quotient of a calculated or estimated total absolute-magnitude compensation ($D_{total}$) and the number N of the fibre link sections (FDS$_1$ to FDS$_N$).

2. Optical transmission system according to Claim 1, **characterized in that** the total absolute-magnitude compensation (D$_{total}$) is yielded by calculation or estimation starting from the maximum total power (P$_{max}$) of the optical signals (OS) that can be launched into the optical transmission system (OTS).

3. Optical transmission system according to Claim 1 or 2, **characterized in that** the total absolute-magnitude compensation (D$_{total}$) is a function of the data rate (DR$_1$, DR$_2$, DR$_3$), the data format (NRZ, RZ) and the fibre type (SSMF, NZDSF).

4. Optical transmission system according to Claim 3, **characterized in that** the maximum total power (P$_{max}$) of the optical signals (OS) that can be launched into the optical transmission system (OTS) is equal to the product of the number N of the fibre link sections (FDS$_1$ to FDS$_N$) and the average launch power (P$_{launch}$) per fibre link section (FDS$_1$ to FDS$_N$).

5. Optical transmission system according to one of Claims 1 to 4, **characterized in that** data rates of greater than 20 Gbit/s are provided for the high-bit-rate transmission of the optical signals (OS).

6. Optical transmission system according to one of Claims 1 to 5, **characterized in that** the non-return-to-zero data format NRZ or the return-to-zero data format RZ is provided for transmitting the optical signals.

7. Optical transmission system according to one of Claims 1 to 6, **characterized in that** optical fibres (SSMF$_1$ to SSMF$_N$) with a minimum length of 20 kilometres are provided in the fibre link sections (FDS$_1$ to FDS$_N$).

8. Optical transmission system according to one of Claims 1 to 7, **characterized in that** the optical fibre (SSMF$_1$ to SSMF$_N$) of a fibre link section is configured as a standard single-mode fibre (SSMF) or as a dispersion-shifted optical fibre (NZDSF).

9. Optical transmission system according to one of Claims 1 to 8, **characterized in that** an optical transmission module is implemented by a fibre link section (FDS) having one optical fibre (SSMF) and one dispersion compensation unit (DCF), and **in that** the optical transmission system (OTS) is constructed from a plurality of optical transmission modules arranged in series.

**Revendications**

1. Système de transmission optique (OTS) pour la transmission, à haut débit de bits, de signaux optiques (OS), composé de N tronçons de fibre optique (FDS) avec respectivement une fibre optique (SSMF) et une unité de compensation de la dispersion (DCU), dans lequel les valeurs absolues de compensation (D$_1$ à D$_{N-1}$) de la première à la N$^{ième}$ unité de compensation de la dispersion (DCU$_1$ à DCU$_{N-1}$) sont dimensionnées de manière telle que le premier au N-1$^{ième}$ tronçon de fibre (FDS$_1$ à FDS$_{N-1}$) sont surcompensés respectivement d'approximativement la même valeur absolue de surcompensation (D$_{über}$) et la valeur absolue de compensation (D$_N$) de la N$^{ième}$ unité de compensation de la dispersion (DCU$_N$) est dimensionnée de manière telle que la dispersion de fibre accumulée (d$_{akk}$) des signaux optiques (OS) à la sortie (E) du système de transmission optique (OTS) est presque entièrement compensée,
**caractérisé en ce**
**que** la valeur absolue de surcompensation (D$_{Über}$) est déterminée par le quotient d'une valeur absolue de compensation totale calculée ou estimée (D$_{total}$) et du nombre N des tronçons de fibre (FDS$_1$ à FDS$_N$).

2. Système de transmission optique selon la revendication 1,
**caractérisé en ce**
**que** la valeur absolue de compensation totale (D$_{total}$) est obtenue par calcul ou estimation à partir de la puissance totale (P$_{max}$) des signaux optiques (OS) maximalement injectable dans le système de transmission optique (OTS).

3. Système de transmission optique selon la revendication 1 ou 2,
**caractérisé en ce**
**que** la valeur absolue de compensation totale (D$_{total}$) dépend du débit de données (DR$_1$, DR$_2$, DR$_3$), du format de données (NRZ, RZ) et du type de fibre (SSMF, NZDSF).

4. Système de transmission optique selon la revendication 3,
**caractérisé en ce**
**que** la puissance totale (P$_{max}$) des signaux optiques (OS) maximalement injectable dans le système de transmission optique (OTS) est égale au produit du nombre N des tronçons de fibre (FDS$_1$ à FDS$_N$) et de la puissance d'entrée moyenne (P$_{launch}$) par tronçon de fibre (FDS$_1$ à FDS$_N$).

5. Système de transmission optique selon l'une des revendications 1 à 4,
**caractérisé en ce**

**que** sont prévus, pour la transmission des signaux optiques (OS) à haut débit de bits, des débits de données supérieurs à 20 Gbits/s.

6. Système de transmission optique selon l'une des revendications 1 à 5,
**caractérisé en ce**
**qu'**est prévu, pour la transmission des signaux optiques, le format de données «non retour à zéro» NRZ ou le format de données «retour à zéro» RZ.

7. Système de transmission optique selon l'une des revendications 1 à 6,
**caractérisé en ce**
**que** sont prévues, dans les tronçons de fibre ($FDS_1$ à $FDS_N$), des fibres optiques ($SSMF_1$ à $SSMF_N$) d'une longueur minimale de 20 kilomètres.

8. Système de transmission optique selon l'une des revendications 1 à 7,
**caractérisé en ce**
**que** la fibre optique ($SSMF_1$ à $SSMF_N$) d'un tronçon de fibre est réalisée en tant que fibre monomode standard (SSMF) ou en tant que fibre optique à dispersion décalée (NZDSF).

9. Système de transmission optique selon l'une des revendications 1 à 8,
**caractérisé en ce**
**qu'**un module de transmission optique est réalisé par un tronçon de fibre (FDS) présentant une fibre optique (SSMF) et une unité de compensation de la dispersion (DCF) et en ce que le système de transmission optique (OTS) est construit à partir de plusieurs modules de transmission optique disposés en série.

FIG 1

EP 1 265 382 B1

FIG 2

$D_{über} = D_{total}/N;$

# FIG 3A

N

(ps/nm/km)    CV

# FIG 3B

Plaunch (dBm)

-3,5
-0,5
2,5

6 dB

Plaunch

(dBm)

EP 1 265 382 B1

FIG 4

SSMF-NRZ

Legend:
- —■— 10 Gb/s=$DR_1$
- —●— 20 Gb/s=$DR_2$
- —▲— 40 Gb/s=$DR_3$
- – – – -750 ps/nm/km
- – – – -96 ps/nm/km
- – – 864 ps/nm/km

N

(ps/nm/km)  CV

EP 1 265 382 B1